# DEMANDE DE BREVET EUROPEEN

(11) **EP 0 829 510 A1**
(43) Date de publication de la demande: **18.03.1998**
(21) Numéro de dépôt: 97202731.2
(22) Date de dépôt: 04.09.1997
(51) Int. Cl.: C08K 5/54, C08L 67/04

(54) **Procédé pour la stabilisation au stockage des poly-epsilon-caprolactones**

(30) Priorité: 13.09.1996 BE 9600767
(71) Demandeur: SOLVAY (Société Anonyme), B-1050 Bruxelles (BE)
(72) Inventeur: Wautier, Henri, 7090 Braine-Le-Comte (BE); Kaszacs, Martine, 1420 Braine L'Alleud (BE)
(74) Mandataire: Jacques, Philippe

(57) **Abrégé**

Les poly-ε-caprolactones produites par polymérisation continue en masse fondue d'ε-caprolactone à l'intervention d'alkoxydes d'aluminium sont stabilisées au stockage par incorporation d'une quantité efficace de dérivé de silicium tel que, par exemple, un oxyde de silicium, un silicate inorganique ou un alkoxyde de silicium, la préférence étant donnée aux alkoxydes de silicium. Ce procédé a pour effet de limiter fortement la réduction progressive au cours du temps de la viscosité inhérente des poly-ε-caprolactones. Suivant un mode de réalisation préféré, on fait précéder l'incorporation du dérivé de silicium par l'incorporation d'une quantité efficace d'eau, ce qui améliore encore la stabilité au stockage des poly-ε-caprolactones produites à l'intervention d'alkoxydes d'aluminium .

## Description

La présente invention concerne un procédé pour la stabilisation au stockage des poly-ε-caprolactones. Elle concerne plus particulièrement un procédé pour la stabilisation au stockage des poly-ε-caprolactones produites à l'intervention d'alkoxydes d'aluminium comme amorceurs de polymérisation (ci-après désignés brièvement par "initiateurs").

Il est connu de produire des poly-ε-caprolactones par polymérisation d'ε-caprolactone, seule ou en mélange avec d'autres lactones, à l'intervention d'alkoxydes d'aluminium comme initiateurs. Ces derniers constituent des initiateurs particulièrement actifs et permettent la fabrication à façon de poly-ε-caprolactones de masses moléculaires variables par réglage du rapport molaire alkoxyde d'aluminium/ ε-caprolactone mis en oeuvre à la polymérisation. Les alkoxydes d'aluminium sont particulièrement adaptés pour initier la polymérisation continue de l' ε-caprolactone en masse fondue dans une extrudeuse (encore appelée polymérisation par extrusion réactive) en vue de produire des poly-ε-caprolactones de masses moléculaires élevées utilisables, notamment, pour façonner des articles finis et semi-finis par façonnage en fondu. L'extrusion réactive de l' ε-caprolactone à l'intervention d'alkoxydes d'aluminium est décrite dans la demande de brevet EP A- 626 405 au nom de SOLVAY.

L'utilisation d'alkoxydes d'aluminium comme amorceurs de la polymérisation de l' ε-caprolactone présente néanmoins l'inconvénient de produire des poly-ε-caprolactones dont la stabilité au stockage laisse à désirer. Cette instabilité au stockage, généralement attribuée à une hydrolyse de la poly-ε-caprolactone, se traduit en pratique par une réduction progressive au cours du temps de la viscosité inhérente des poly-ε-caprolactones.

On a déjà proposé d'améliorer la stabilité au stockage des poly-ε-caprolactones produites par polymérisation d'ε-caprolactone en solution dans le toluène à l'intervention d'alkoxydes d'aluminium en procédant successivement à des extractions répétées des résidus catalytiques au moyen d'une solution aqueuse diluée d'acide chlorhydrique, la neutralisation de la solution de poly-ε-caprolactone dans le toluène par lavage à l'eau et enfin la précipitation de la poly-ε-caprolactone dans l'heptane (T. Ouhadi, Ch. Stevens and Ph. Teyssié, Die Makromolekulare Chemie, Suppl. 1, 191-201 (1975). Quoique ce type de traitement améliore effectivement la stabilité au stockage des poly-ε-caprolactones produites à l'intervention d'alkoxydes d'aluminium, il ne paraît pas applicable à l'échelle industrielle. En outre, les résultats auxquels il conduit sont perfectibles.

La présente invention a pour but de procurer un procédé de stabilisation au stockage des poly-ε-caprolactones produites par extrusion réactive d'ε-caprolactone à l'intervention d'alkoxydes d'aluminium qui ne présente pas les inconvénients précités tout en étant très efficace et d'une application industrielle aisée.

A cet effet, l'invention concerne un procédé de stabilisation au stockage des poly-ε-caprolactones produites par polymérisation continue d' ε-caprolactone en masse fondue dans une extrudeuse à l'intervention d'alkoxydes d'aluminium comme amorceurs de polymérisation, caractérisé en ce qu'on incorpore à la poly-ε-caprolactone une quantité efficace d'agent de stabilisation dérivé de silicium.

Par polymérisation en masse fondue, on entend désigner aux fins de la présente invention, la polymérisation en l'absence substantielle de solvant ou de diluant et à une température au moins égale à la température de fusion des poly-ε-caprolactones produites.

Par extrudeuse, on entend désigner tout dispositif continu comprenant une zone d'alimentation et une zone d'évacuation au travers duquel la matière en fusion est forcée à passer avec des temps de séjour moyens ne dépassant pas 15 minutes. Avantageusement, il sera fait appel à des extrudeuses connues basées sur le travail de deux vis, qu'elles soient co- ou contrarotatives.

Par poly-ε-caprolactones, on entend désigner aussi bien les homopolymères de l' ε-caprolactone que les copolymères avec d'autres lactones, telles que la β-propiolactone ou la δ-valérolactone, à teneur prépondérante en ε-caprolactone. Le procédé de stabilisation selon la présente invention convient particulièrement pour la stabilisation de poly-ε-caprolactones homopolymères produites par extrusion réactive d'ε-caprolactone à l'intervention d'alkoxydes d'aluminium.

Enfin, par alkoxyde d'aluminium on entend désigner aux fins de la présente invention les composés organoaluminiques comprenant au moins un lien aluminoxane-carbone (> Al-O-C-) et les mélanges de tels composés. Le plus souvent, l'alkoxyde d'aluminium contiendra trois liens aluminoxanes. Avantageusement, l'alkoxyde d'aluminium sera choisi parmi les trialkoxydes d'aluminium dont les radicaux alkyles, identiques ou différents, contiennent de 2 à 6 atomes de carbone (tels que par exemple le tri-butoxyde d'aluminium) ou encore parmi les trialkoxydes d'aluminium dont au moins un radical alkoxy contient, outre l'atome d'oxygène constitutif du lien aluminoxane (> Al-O), au moins un autre atome d'oxygène présent sous la forme d'une fonction ester (tels que par exemple les oligomères de l'ε-caprolactone produits par polymérisation de 1 à 12 moles d'ε-caprolactone en présence d'une mole de trialkoxyde d'aluminium) ou encore un autre atome d'oxygène présent sous la forme d'une fonction éther (tels que par exemple les trialkoxyalkyloxydes d'aluminium comme le tri(méthoxyéthoxy)aluminium). Les trialkoxydes d'aluminium dont au moins un des radicaux alkoxy contient, outre le lien aluminoxane, une fonction éther ou ester se présentent généralement à l'état liquide à température ambiante et peuvent dès lors être mis en oeuvre sans solvant. Avantageusement, les alkoxydes d'aluminium sont mis en oeuvre en présence d'un alcool agissant comme agent de transfert de chaînes, en une quantité n'excédant généralement pas 3 moles d'alcool par mole d'alkoxyde d'aluminium, ce qui permet de réduire les quantités d'alkoxydes d'aluminium nécessaires pour produire des poly-ε-caprolactones de masse moléculaire préétablie et réduit dès lors les résidus catalytiques dans les poly-ε-caprolactones produites.

La présente invention est basée sur la constatation surprenante que l'incorporation en quantité appropriée de dérivés choisis du silicium contribue efficacement à améliorer la stabilité au stockage des poly-ε-caprolactones produites par extrusion réactive d' ε-caprolactone à l'intervention d'alkoxydes d'aluminium tels que définis ci-dessus.

A titre d'exemples non limitatifs de dérivés de silicium utilisables comme agents de stabilisation dans le cadre du procédé de l'invention, on peut mentionner les oxydes de silicium, tels que les silices, enrobées ou non enrobées et pouvant éventuellement contenir de l'eau d'hydratation, les silicates inorganiques (silicates de métaux) et les alkoxydes de silicium. Les meilleurs résultats sont obtenus avec les alkoxydes de silicium. Des alkoxydes particulièrement préférés sont les tétra-alkoxydes de silicium dont les radicaux alkyles, identiques ou différents, contiennent de 1 à 8 atomes de carbone et, plus particulièrement encore ceux dont les quatre radicaux alkyles sont identiques et contiennent de 1 à 4 atomes de carbone. D'excellents résultats sont obtenus avec le tétraéthoxyde de silicium de formule :

Si(O-CH₂-CH₃)₄.

En pratique, l'amélioration de la stabilité au stockage des poly-ε-caprolactones peut se mesurer par le rapport des indices de fluidité (MFI) de la poly-ε-caprolactone avant et après stockage dans des conditions déterminées de durées et de températures.

Par MFI, on entend ci-après l'indice de fluidité mesuré selon la norme ASTM D 1238 (160 °C, 2,16 kg; filière 8/2). Par MFI_{init.}, on entend ci-après le MFI (tel que défini ci-dessus) de la poly-ε-caprolactone non vieillie et par MFI_{stock.} le MFI (tel que défini ci-dessus) de la poly-ε-caprolactone après un stockage en étuve ventilée pendant 15 heures à 180 °C.

Par quantité efficace de dérivé du silicium, on entend une quantité suffisante pour améliorer la stabilité au stockage de la poly-ε-caprolactone, c'est-à-dire pour réduire le rapport MFI_{stock.} / MFI_{init.} et donc limiter la réduction par stockage de la viscosité inhérente de la poly-ε-caprolactone.

Pour fixer les idées, la quantité de dérivé de silicium sera en général au moins égale à 1 mole par mole d'alkoxyde d'aluminium mise en oeuvre à la polymérisation de l' ε-caprolactone; le plus souvent, elle sera au moins égale à 1,5 mole par mole d'alkoxyde d'aluminium. Par ailleurs, la quantité de dérivé de silicium ne dépassera généralement pas 30 moles par mole d'alkoxyde d'aluminium mise en oeuvre à la polymérisation de l' ε-caprolactone; le plus souvent, elle ne dépassera pas 15 moles par mole d'alkoxyde d'aluminium. D'excellents résultats sont obtenus en traitant la poly-ε-caprolactone avec un dérivé de silicium en une quantité allant de 2 à 8 moles par mole d'alkoxyde d'aluminium mise en oeuvre à la polymérisation de l'ε-caprolactone.

L'incorporation du dérivé de silicium aux poly-ε-caprolactones produites par extrusion réactive permet généralement de réduire le rapport des indices de fluidité MFI _{stock}. /MFI _{init.} (tels que définis ci-dessus) à des valeurs inférieures à 2,5 et même à 2 dans le cas des dérivés de silicium préférés du type des alkoxydes de silicium.

Le mode d'incorporation du dérivé de silicium dans la poly-ε-caprolactone n'est pas critique. On peut donc incorporer le dérivé de silicium à la poly-ε-caprolactone extraite de l'extrudeuse dans n'importe quel dispositif de mélange approprié à l'obtention d'un mélange homogène. Avantageusement, on incorpore le dérivé de silicium dans la poly-ε-caprolactone après la polymérisation proprement dite dans l'extrudeuse, mais avant la sortie de l'extrudeuse. Dans ce cas, le type et le profil de vis de l'extrudeuse sont choisis de manière à permettre l'alimentation en monomère et en amorceur, ainsi que la polymérisation dans une première partie de l'extrudeuse et l'incorporation du dérivé de silicium dans une seconde partie de l'extrudeuse. Dans le cas où le dérivé de silicium se présente à l'état solide (cas des silices et des silicates inorganiques), il est recommandé d'incorporer le dérivé de silicium sous la forme d'un mélange-maître. Dans le cas où le dérivé de silicium se présente à l'état d'un liquide, tel que par exemple le tétraéthoxyde de silicium, il est avantageux de le pulvériser directement sur la poly-ε-caprolactone dans le fourreau de l'extrudeuse.

L'augmentation de la stabilité au stockage des poly-ε-caprolactones produites à l'intervention d'alkoxydes d'aluminium peut encore être améliorée lorsqu'on fait précéder l'incorporation d'un dérivé de silicium par l'incorporation d'une quantité efficace d'eau.

Suivant un mode de réalisation préféré du procédé selon l'invention, on fait précéder l'incorporation du dérivé de silicium à la poly-ε-caprolactone de l'incorporation d'une quantité efficace d'eau. Dans ce cas, les rapports des indices de fluidité MFI_{stock.}/MFI_{init.} sont généralement inférieurs à 1,5.
L'eau incorporée à la poly-ε-caprolactone peut se présenter sous n'importe quelle forme liquide, c'est-à-dire sous forme libre ou associée, par exemple sous forme d'eau d'hydration d'un composé inorganique inerte vis-à-vis de la poly-ε-caprolactone. Néanmoins, on préfère utiliser de l'eau libre et, en particulier, de l'eau déminéralisée.

La quantité d'eau à mettre en oeuvre pour améliorer (encore) la stabilité au stockage des poly-ε-caprolactones peut varier dans des proportions assez importantes et n'est pas particulièrement critique. Généralement, on utilisera au moins 1 x n moles d'eau par mole d'alkoxyde d'aluminium mise en oeuvre comme amorceur, n représentant le nombre de radicaux alkoxy de l'alkoxyde d'aluminium. Le plus souvent, on en utilisera au moins 1,5 x n moles par mole d'alkoxyde d'aluminium. Des quantités aussi élevées que 200 x n moles par mole d'alkoxyde d'aluminium mise en oeuvre à la polymérisation de l'ε-caprolactone peuvent être utilisées sans inconvénient. Néanmoins, le plus souvent, on ne dépasse pas 100 x n moles d'eau par mole d'alkoxyde d'aluminium mise en oeuvre comme amorceur. D'excellents résultats sont obtenus par incorporation à la poly-ε-caprolactone d'une quantité d'eau équivalent à 2 x n à 50 x n moles par mole d'alkoxyde d'aluminium mise en oeuvre comme amorceur à la polymérisation de l'ε-caprolactone.

Tout comme le dérivé de silicium, l'eau est avantageusement introduite dans la poly-ε-caprolactone après la polymérisation proprement dite dans l'extrudeuse, mais avant la sortie de l'extrudeuse. Il est impératif d'incorporer l'eau avant le dérivé de silicium.

Il est entendu que les poly-ε-caprolactones soumises au traitement de stabilisation au stockage suivant la présente invention peuvent contenir tous les ingrédients usuels utilisés à la mise en oeuvre des poly-ε-caprolactones, tels que des stabilisants thermiques et des anti-oxydants, lesquels peuvent éventuellement être incorporés dès le départ au monomère, ou encore des agents nucléants capables d'élever la température de cristallisation. A titre d'exemples non limitatifs de stabilisants thermiques et d'antioxydants utilisables, on peut mentionner des produits du type des phénols substitués tels que le tétrakis [méthylène -(3,5-di-t-butyl-4-hydroxy-dihydrocinnamate] méthane ou encore le 4,4'-butylidène-bis(6-t-butyl-métacrésol),ainsi que les carbodiimides. A titre d'exemples non limitatifs d'agents nucléants efficaces des poly-ε-caprolactones, on peut mentionner le nitrure de bore et, plus particulièrement encore, le di-p-éthylbenzylidène sorbitol lequel est capable d'élever la température de cristallisation de la poly-ε-caprolactone d'environ 26-27 °C à environ 39 °C.

La présente invention concerne également des compositions de poly-ε-caprolactone stables au stockage. Ces compositions comprennent de la poly-ε-caprolactone et une quantité efficace d'agent de stabilisation dérivé de silicium.

De préférence, dans les compositions de poly-ε-caprolactone stables au stockage selon l'invention, le dérivé de silicium est choisi parmi les oxydes de silicium, les silicates inorganiques et les alkoxydes de silicium. Des alkoxydes particulièrement préférés sont les tétra-alkoxydes de silicium dont les radicaux alkyles, identiques ou différents, contiennent de 1 à 8 atomes de carbone et, plus particulièrement ceux dont les quatre radicaux alkyles sont identiques et contiennent de 1 à 4 atomes de carbone. D'excellents résultats sont obtenus avec le tétra-éthoxyde de silicium de formule :

Si(O-CH₂-CH₃)₄.

Les exemples qui suivent sont destinés à illustrer le procédé de l'invention.

Les exemples 1 à 5 concernent tous une poly-ε-caprolactone ayant une masse moléculaire moyenne en poids approximative de 80 000 produite par homopolymérisation à 150 °C d'ε-caprolactone introduite à raison de 7kg/h dans une extrudeuse, l'amorceur de polymérisation étant constitué d'un mélange équimolaire de tri-sec-butoxyde d'aluminium et de méthoxyéthanol, introduit dans l'extrudeuse à l'aide d'un pousse-seringue, à un débit de 14g/h (soit 0,044 moles Al/h).

L'extrudeuse utilisée pour la polymérisation est une extrudeuse à double vis corotative dont le profil de vis (longueur : 1050 mm) est aménagé de manière que la première partie (de 0 à 616 mm) permette l'alimentation en monomère et en amorceur, ainsi que la polymérisation complète et que la seconde partie puisse servir à introduire les additifs et à les mélanger au polymère formé en début de vis. La vitesse de vis est 100tr/min.et le temps de séjour total dans l'extrudeuse de 120 secondes.

La première partie de l'extrudeuse (de 0 à 604 mm) comprend deux zones : une zone de convoyage des réactifs en cours de polymérisation et une deuxième zone (de 604 à 616) dans laquelle la vis présente un pas gauche pour ralentir la matière avant introduction des additifs et éviter que ceux-ci ne remontent vers l'amont.

La deuxième partie de l'extrudeuse comprend une première zone d'alimentation pour l'eau et de mélange de celle-ci avec la poly-ε-caprolactone (de 616 à 736 mm), ainsi qu'une seconde zone d'alimentation pour le dérivé de silicium et le mélange de celui-ci avec la poly-ε-caprolactone (de 736 à 880 mm) et enfin une zone de dégazage éventuel et de compression avant la filière.

Dans les exemples 1 à 4, on a mis en oeuvre une ε-caprolactone contenant les trois stabilisants thermiques et anti-oxydants usuels de la poly-ε-caprolactone suivants :
- tétrakis [méthylène -(3,5-di-t.-butyl-4-hydroxy) dihydrocinnamate] méthane (stabilisant a) à raison de 0,1 % en poids;
- 4,4'-butylidène-bis (6-t.-butyl-métacrésol) (stabilisant b) à raison de 0,05 % en poids;
- carbodiimide (stabilisant c) à raison de 0,1 % en poids.

Dans l'exemple 5, on a mis en oeuvre une ε-caprolactone contenant les stabilisants a et b dans les quantités précitées, le stabilisant c étant introduit dans la poly-ε-caprolactone à raison de 0,2 % en poids, par rapport à l'ε-caprolactone mise en oeuvre, juste après la stabilisation au stockage selon l'invention et sous la forme d'un mélange-maître à base de poly-ε-caprolactone.

Dans l'exemple 1, donné à titre comparatif, la poly-ε-caprolactone n'a pas été stabilisée au stockage.

Dans l'exemple 2, la poly-ε-caprolactone a été stabilisée au stockage par introduction continue dans la deuxième partie de l'extrudeuse de silice (vendue sous la marque SYLOBLOC CP4 7754) sous la forme d'un mélange-maître avec de la poly-ε-caprolactone en une quantité correspondant à 1 % en poids par rapport à l'ε-caprolactone mise en oeuvre (soit 26 moles/mole d'amorceur).

Dans l'exemple 3, la poly-ε-caprolactone a été stabilisée au stockage par introduction continue dans la deuxième partie de l'extrudeuse de tétraéthoxysilicium en une quantité correspondant à 1 % en poids par rapport à l'ε-caprolactone mise en oeuvre (soit 7,6 moles/mole d'amorceur).

Dans l'exemple 4, la poly-ε-caprolactone a été stabilisée au stockage par introduction successive dans les zones appropriées de l'extrudeuse d'eau en une quantité correspondant à 1,5 % en poids par rapport à l'ε-caprolactone mise en oeuvre (soit 130 moles/mole d'amorceur) et de 1 % en poids de tétraéthoxysilicium par rapport à l'ε-caprolactone mise en oeuvre.

Dans l'exemple 5, on a procédé comme à l'exemple 4 si ce n'est que le stabilisant c a été introduit (comme déjà mentionné plus haut) sous la forme d'un mélange-maître directement après le dérivé de silicium.

Dans le tableau I ci-après sont consignées la nature et la quantité des stabilisants au stockage mis en oeuvre selon le procédé de l'invention dans la poly-ε-caprolactone produite par polymérisation de l'ε-caprolactone en masse fondue dans une extrudeuse (extrusion réactive) à l'intervention de trialkoxyde d'aluminium.

La comparaison des résultats de l'exemple comparatif 1 avec ceux des exemples 2 et 3 selon l'invention montre l'amélioration appréciable de la stabilité au stockage des poly-ε-caprolactones incorporant un dérivé de silicium.

La comparaison des résultats de l'exemple 3 avec ceux des exemples 4 et 5 reflète l'amélioration supplémentaire qu'apporte l'incorporation préalable d'eau à la poly-ε-caprolactone.

**TABLEAU I**

| N° de l'exemple | Agents de stabilisation | | MFI (ASTM D 1238) | | MFI_{stock.}/MFI_{init.} |
|---|---|---|---|---|---|
| | Nature | Quantité, % * | MFI_{stock.} | MFI_{init.} | |
| 1(C) | --- | --- | 48 | 13 | 3,70 |
| 2 | SiO₂ | 1,0 | 41 | 18 | 2,28 |
| 3 | TEOS** | 1,0 | 30 | 17 | 1,76 |
| 4 | eau | 1,5 | | | |
| | TEOS | 1,0 | 19 | 15 | 1,27 |
| 5 | eau | 1,5 | | | |
| | TEOS | 1,0 | 13 | 12 | 1,10 |

| | | | | | |
|---|---|---|---|---|---|
| * % en poids par rapport à la quantité d'ε-caprolactone mise en oeuvre à la polymérisation | | | | | |
| ** tétraéthoxysilicium | | | | | |

## Revendications

1. Procédé de stabilisation au stockage des poly-ε-caprolactones produites par polymérisation continue d'ε-caprolactone en masse fondue dans une extrudeuse à l'intervention d'alkoxydes d'aluminium comme amorceurs de polymérisation, caractérisé en ce qu'on incorpore à la poly-ε-caprolactone une quantité efficace d'agent de stabilisation dérivé de silicium.

2. Procédé de stabilisation au stockage des poly-ε-caprolactones selon la revendication 1, caractérisé en ce que le dérivé de silicium est choisi parmi les oxydes de silicium, les silicates inorganiques et les alkoxydes de silicium.

3. Procédé de stabilisation au stockage des poly-ε-caprolactones selon la revendication 2, caractérisé en ce que le dérivé de silicium est un tétra-alkoxyde de silicium dont les radicaux alkyles, identiques ou différents, contiennent de 1 à 8 atomes de carbone.

4. Procédé de stabilisation au stockage des poly-ε-caprolactones selon la revendication 3, caractérisé en ce que le tétra-alkoxyde de silicium est le tétra-éthoxyde de silicium de formule :
Si(O-CH₂-CH₃)₄

5. Procédé de stabilisation au stockage des poly-ε-caprolactones selon l'une quelconque des revendications 1 à 4, caractérisé en ce que le dérivé de silicium est mis en oeuvre en une quantité d'au moins 1 mole et de pas plus de 30 moles par mole d'alkoxyde d'aluminium mise en oeuvre à la polymérisation de l'ε-caprolactone.

6. Procédé de stabilisation au stockage des poly-ε-caprolactones selon l'une quelconque des revendications 1 à 5, caractérisé en ce que le dérivé de silicium est incorporé à la poly-ε-caprolactone en fin de polymérisation avant la sortie de l'extrudeuse.

7. Procédé de stabilisation au stockage des poly-ε-caprolactones selon l'une quelconque des revendications 1 à 6, caractérisé en ce qu'on fait précéder l'incorporation du dérivé de silicium par l'incorporation d'une quantité efficace d'eau.

8. Procédé de stabilisation au stockage des poly-ε-caprolactones selon la revendication 7, caractérisé en ce que l'eau est incorporée sous la forme d'eau libre déminéralisée.

9. Procédé de stabilisation au stockage des poly-ε-caprolactones selon la revendication 8, caractérisé en ce que l'eau est mise en oeuvre en une quantité d'au moins 1 x n moles et de pas plus de 200 x n moles par mole d'alkoxyde d'aluminium mise en oeuvre à la polymérisation de l' ε-caprolactone, n représentant le nombre de radicaux alkoxy de l'alkoxyde d'aluminium.

10. Procédé de stabilisation au stockage des poly-ε-caprolactones selon l'une quelconque des revendications 7 à 9, caractérisé en ce que l'eau est incorporée à la poly-ε-caprolactone en fin de polymérisation avant la sortie de l'extrudeuse.

11. Composition de poly-ε-caprolactone stable au stockage, caractérisée en ce qu'elle comprend de la poly-ε-caprolactone et une quantité efficace d'agent de stabilisation dérivé de silicium.

12. Composition de poly-ε-caprolactone stable au stockage selon la revendication 11, caractérisée en ce que le dérivé de silicium est choisi parmi les oxydes de silicium, les silicates inorganiques et les alkoxydes de silicium.

13. Composition de poly-ε-caprolactone stable au stockage selon l'une quelconque des revendications 11 à 12, caractérisée en ce que le dérivé de silicium est un tétra-alkoxyde de silicium dont les radicaux alkyles, identiques ou différents, contiennent de 1 à 8 atomes de carbone.

14. Composition de poly-ε-caprolactone stable au stockage selon l'une quelconque des revendications 11 à 13, caractérisée en ce que le tétra-alkoxyde de silicium est le tétra-éthoxyde de silicium de formule :
Si(O-CH₂-CH₃)₄.
